# EUROPÄISCHE PATENTSCHRIFT

(11) **EP 1 037 448 B1**
(45) Veröffentlichungstag und Bekanntmachung des Hinweises auf die Patenterteilung: **06.12.2006**
(21) Anmeldenummer: 00104356.1
(22) Anmeldetag: 02.03.2000
(51) Int. Cl.: H04M 1/274, H04M 3/44

(54) **Elektronische Telefonbucheinrichtung und Verfahren für einen Verbindungsaufbau**
Electronic phonebook and method for setting up a call
Annuaire électronique et procédé permettant d'établir une communication

(30) Priorität: 17.03.1999 DE 19911986
(43) Veröffentlichungstag der Anmeldung: 20.09.2000
(73) Patentinhaber: SIEMENS AKTIENGESELLSCHAFT, 80333 München (DE)
(72) Erfinder: Gerum, Hans, 82256 Fürstenfeldbruck (DE)

(56) Entgegenhaltungen:
- WO-A-97/03514
- WO-A-98/21865
- US-A- 5 668 955

## Beschreibung

Die Erfindung betrifft eine elektronische Telefonbucheinrichtung bzw. ein Verfahren für einen Verbindungsaufbau mittels einer, in der elektronischen Telefonbucheinrichtung gespeicherten Teilnehmerrufnummer gemäß dem Obergriff des Patentanspruchs 7 bzw. 1.

Aus der Produktschrift der Fa. Siemens "ISDN im Büro - HICOM", Sonderausgabe telcom report und Siemens-Magazin COM, 1985, ISBN 3-8009-3849-9, insbesondere der Seiten 26 bis 31 und 58 bis 66, ist eine private Kommunikationsanlage bekannt, die neben vermittlungsbezogenen Funktionen zusätzliche Funktionen zur Verfügung stellt. Solche zusätzlichen Funktionen werden im allgemeinen als Leistungsmerkmale bezeichnet, wobei ein bekanntes Leistungsmerkmal beispielsweise das sogenannte elektronische Telefonbuch der privaten Kommunikationsanlage ist. In das elektronische Telefonbuch kann ein interner, der Kommunikationsanlage zugeordneter Teilnehmer ausgewählte Rufnummern teilnehmerindividuell abspeichern, und anhand der gespeicherten Rufnummern auf einfache Weise eine Kommunikationsverbindung mit einem, durch eine ausgewählte Rufnummer identifizierten Kommunikationsendgerät aufbauen. Des weiteren sind Kommunikationsendgeräte bekannt, die ein im Kommunikationsendgerät integriertes, d.h. in einem lokalen Speicher des Kommunikationsendgerätes hinterlegtes elektronisches Telefonbuch aufweisen.

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die Möglichkeiten zur Reduzierung dieser Kosten suchen. Eine Möglichkeit diese Kosten zu reduzieren ist ein Verbindungsaufbau über ein, einem sogenannten alternativen Netzanbieter zugeordnetes Kommunikationsnetz, bei dem für eine Verbindung der gleichen Kommunikationseinrichtungen niedrigere Gebühren anfallen, als bei einem Verbindungsaufbau über ein, einem standardmäßig benutzten Netzanbieter zugeordnetes Kommunikationsnetz. Ein Verbindungsaufbau über das Kommunikationsnetz eines alternativen Netzanbieters erfolgt beim sogenannten 'Call-by-Call'-Ver' fahren durch Eingabe einer, den alternativen Netzanbieter identifizierenden Netzrufnummer an einem die Verbindung initiierenden Kommunikationsendgerät. Solche Methode ist aus WO 97/03514 bekannt.

Möchte ein Teilnehmer für die, in dem ihm zugeordneten elektronischen Telefonbuch gespeicherten Teilnehmerrufnummern eine Verbindung über ein Kommunikationsnetz eines alternativen Netzanbieters vorsehen, wird die Netzrufnummer des gewünschten Netzanbieters in der Regel im Sinne einer Vorwahl zusammen mit der Teilnehmerrufnummer im elektronischen Telefonbuch abgespeichert. Hierbei wird im allgemeinen die Netzrufnummer desjenigen alternativen Netzanbieters eingespeichert, der über den längsten Tages- bzw. Wochenzeitraum die billigsten Tarife zur Verfügung stellt.

Will der Teilnehmer nach einer häufig vorkommenden Tarifänderung bei den Netzanbietern weiterhin über das Kommunikationsnetz des günstigsten Netzanbieters telefonieren, muß er gegebenenfalls alle relevanten Einträge im elektronischen Telefonbuch manuell ändern, was im allgemeinen mit einem hohen Aufwand verbunden ist. Ist das Kommunikationsnetz eines, durch die im elektronischen Telefonbuch gespeicherte Vorwahl ausgewählten alternativen Netzbetreibers zum Zeitpunkt eines Verbindungsaufbaus überlastet, so daß kein Verbindungsaufbau mit einem gewünschten Kommunikationsendgerät über dieses Kommunikationsnetz möglich ist, so muß der rufende Teilnehmer die relevante Teilnehmerrufnummer eventuell zusätzlich mit der Vorwahl eines anderen alternativen Netzbetreibers manuell am Kommunikationsendgerät eingeben.

Der vorliegenden Erfindung liegt daher die Aufgabe zugrunde, eine elektronische Telefonbucheinrichtung derart auszugestalten, daß das 'Call-by-Call'-Verfahren komfortabel ausgeführt werden kann.

Gelöst wird die Aufgabe ausgehend von den Merkmalen des Oberbegriffs des Patentanspruchs 1 bzw. 7 durch deren kennzeichnende Merkmale.

Ein wesentlicher Vorteil der erfindungsgemäßen elektronischen Telefonbucheinrichtung besteht nun darin, daß durch eine Speicherung einer, eine Netzrufnummer eines Kommunikationsnetzes identifizierenden Kommunikationsnetzbezeichnung - im Gegensatz zur Speicherung der Netzrufnummer - zugeordnet zu den gespeicherten Teilnehmerrufnummern, bei einer Tarifänderung eine Anpassung der Einträge der elektronischen Telefonbucheinrichtung an einen anderen günstigeren Netzanbieter auf einfache Weise möglich ist. So müssen bei der erfindungsgemäßen elektronischen Telefonbucheinrichtung nicht, wie üblich alle relevanten Einträge aktualisiert werden, sondern es muß lediglich einmal die durch die relevante Kommunikationsnetzbezeichnung identifizierte Netzrufnummer eines Netzanbieters in einem dafür vorgesehenen Korrelationsspeicher der elektronischen Telefonbucheinrichtung aktualisiert werden.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Verwendung einer variablen Kommunikationsnetzbezeichnung, die sämtliche in der Datenbasis hinterlegten Netzrufnummern identifiziert, einem rufenden Teilnehmer die Möglichkeit gegeben wird, situationsabhängig eine Auswahl eines geeigneten Netzanbieters vornehmen zu können. So muß der rufende Teilnehmer in Fällen, in denen ein Verbindungsaufbau über ein Kommunikationsnetz nicht möglich ist, die relevante Teilnehmerrufnummer nicht manuell am Kommunikationsendgerät eingeben, sondern kann auf einfache Weise einen neuen Verbindungsaufbau ausgehend von der elektronischen Telefonbucheinrichtung mit einer alternativen Netzrufnummer initiieren.

Ein Ausführungsbeispiel der Erfindung wird im folgenden anhand der Zeichnung näher erläutert.

Dabei zeigen:
- Fig. 1:: ein Strukturbild zur schematischen Darstellung der bei einem Verbindungsaufbau mittels einer, in einer elektronischen Telefonbucheinrichtung gespeicherten Teilnehmerrufnummer beteiligten wesentlichen Funktionseinheiten;
- Fig. 2:: eine schematische Darstellung eines Rufnummernspeichers der elektronischen Telefonbucheinrichtung;
- Fig. 3:: eine schematische Darstellung eines Korrelationsspeichers der elektronischen Telefonbucheinrichtung;
- Fig. 4:: ein Ablaufdiagramm zur Veranschaulichung der bei einem Verbindungsaufbau mittels einer, in der elektronischen Telefonbucheinrichtung gespeicherten Teilnehmerrufnummer ablaufenden wesentlichen Verfahrensschritte.

Die Erfindung wird im folgenden anhand einer, in einer Kommunikationsanlage gespeicherten elektronischen Telefonbucheinrichtung beschrieben. Die Erfindung ist aber auch auf lokal in einem Kommunikationsendgerät integrierte elektronische Telefonbucheinrichtungen anwendbar.

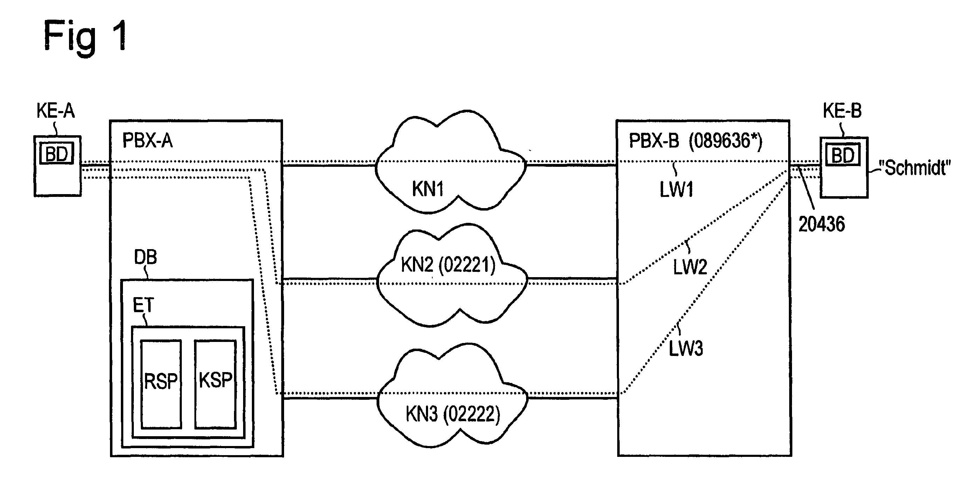

Fig. 1 zeigt eine schematische Darstellung einer ersten und einer zweiten Kommunikationsanlage PBX-A, PBX-B die beispielhaft über drei, unterschiedlichen Netzanbietern zugeordnete Kommunikationsnetze KN1, KN2, KN3 miteinander verbunden sind. An die erste Kommunikationsanlage PBX-A ist ein erstes Kommunikationsendgerät KE-A und an die zweite Kommunikationsanlage PBX-B ist ein zweites Kommunikationsendgerät KE-B angeschlossen. Sowohl das erste Kommunikationsendgerät KE-A, als auch das zweite Kommunikationsendgerät KE-B weisen eine optische Bedienoberfläche BD auf. Der zweiten Kommunikationsanlage PBX-B ist im vorliegenden Ausführungsbeispiel die Anlagenrufnummer 089636* - in der Figur durch die Klammer angedeutet - zugeordnet. Des weiteren ist das zweite Kommunikationsendgerät KE-B im vorliegenden Ausführungsbeispiel einem Teilnehmer mit dem Namen "Schmidt" zugeordnet und ist mittels der kommunikationsanlagen-internen Rufnummer 20436 adressierbar.

Im folgenden wird davon ausgegangen, daß im Rahmen eines Verbindungsaufbaus zwischen dem ersten Kommunikationsendgerät KE-A und dem zweiten Kommunikationsendgerät KE-B standardmäßig eine Kommunikationsverbindung LW1 - in der Figur durch die gepunktete Linie angedeutet - über das erste Kommunikationsnetz KN1 aufgebaut wird. Alternativ kann durch Vorwahl einer, das zweite bzw. das dritte Kommunikationsnetz identifizierenden Netzrufnummer 02221, 02222 - in der Figur durch die Klammern angedeutet - an einem rufenden Kommunikationsendgerät eine Kommunikationsverbindung LW2, LW3 zwischen dem ersten Kommunikationsendgerät KE-A und dem zweiten Kommunikationsendgerät KE-B über das zweite Kommunikationsnetz KN2 bzw. das dritte Kommunikationsnetz KN3 eingerichtet werden.

In einer Datenbasis DB der ersten Kommunikationsanlage PBX-A ist eine den internen, d.h. den an der ersten Kommunikationsanlage PBX-A angeschlossenen Kommunikationsendgeräten KE-A zugeordnete elektronische Telefonbucheinrichtung ET eingerichtet. Mittels der elektronischen Telefonbucheinrichtung ET kann ein interner, der ersten Kommunikationsanlage PBX-A zugeordneter Teilnehmer von ihm ausgewählte Rufnummern teilnehmerindividuell abspeichern, und anhand dieser auf einfache Weise eine Kommunikationsverbindung mit einem, durch eine ausgewählte Rufnummer identifiziertes Kommunikationsendgerät aufbauen. Die elektronische Telefonbucheinrichtung ET weist dazu einen Rufnummernspeicher RSP zur teilnehmerindividuellen Speicherung der Rufnummern und zusätzlich einen Korrelationsspeicher KSP auf, der im folgenden näher beschrieben wird.

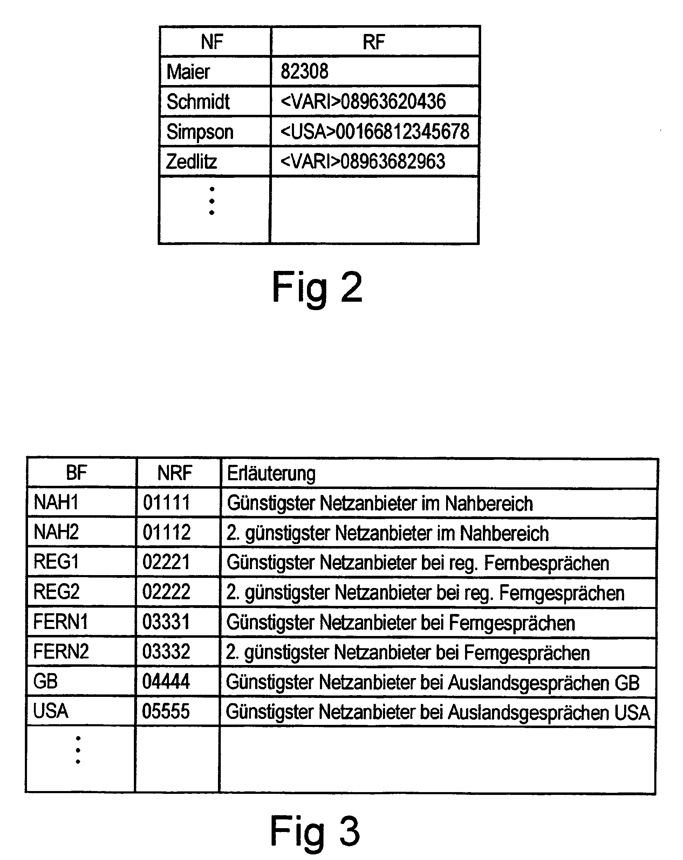

Fig. 2 zeigt eine schematische Darstellung des Rufnummernspeichers RSP der elektronischen Telefonbucheinrichtung ET. Der Rufnummernspeicher RSP weist für jeden Eintrag ein Namensfeld NF zur Speicherung des Namens eines zu adressierenden Teilnehmers und ein Rufnummernfeld RF zur Speicherung der, dem Teilnehmer zugeordneten Rufnummer auf. Die Einträge sind dabei in alphabetischer Reihenfolge gemäß des Namenfeldes NF sortiert. Die Rufnummernfelder RF sind derart ausgestaltet, daß zusätzlich zur Rufnummer des Teilnehmers eine Kommunikationsnetzbezeichnung KNB gespeichert werden kann. Diese Kommunikationsnetzbezeichnung KNB kann von einem Teilnehmer individuell konfiguriert werden und dient als Zeiger auf einen, der Kommunikationsnetzbezeichnung KNB zugeordneten Eintrag im Korrelationsspeicher KSP.

Fig. 3 zeigt eine schematische Darstellung des Korrelationsspeichers KSP der elektronischen Telefonbucheinrichtung ET. Im Korrelationsspeicher KSP ist für jeden Eintrag ein Bezeichnungsfeld BF zur Speicherung einer Kommunikationsnetzbezeichnung KNB, ein Netzrufnummernfeld NRF zur Speicherung einer, einem Netzanbieter zugeordneten Netzrufnummer NR und ein Erläuterungsfeld vorgesehen. Im vorliegenden Ausführungsbeispiel sind jeweils zwei Kommunikationsnetzbezeichnungen KNB für Kommunikationsverbindungen im Nahbereich (Entfernung kleiner als 20 km), für Kommunikationsverbindungen im Regionalbereich (Entfernung zwischen 20 und 50 km), für Kommunikationsverbindungen im Fernbereich (Entfernung größer als 50 km) und jeweils eine Kommunikationsnetzbezeichnung KNB für die Länder Großbritannien und USA eingerichtet. Beispielsweise ist eine Kommunikationsnetzbezeichnung KNB = NAH1 eingerichtet, die den günstigsten Netzanbieter im Nahbereich bezeichnet. Das diesem Netzanbieter zugeordnete Kommunikationsnetz wird durch die Netzrufnummer NR = 01111 eindeutig identifiziert.

Ist in einem Rufnummernfeld RF des Rufnummernspeichers RSP zusätzlich zur Rufnummer eine Kommunikationsnetzbezeichnung KNB gespeichert, wird im Rahmen eines Verbindungsaufbaus anhand des Korrelationsspeichers BSP die zugehörige Netzrufnummer NR ermittelt. Die ermittelte Netzrufnummer NR wird der ausgewählten Rufnummer im Sinne einer Vorwahl vorangestellt und ein Verbindungsaufbau erfolgt über das, durch die Netzrufnummer NR identifizierte Kommunikationsnetz. Ist in einem Rufnummernfeld RF des Rufnummernspeichers RSP zusätzlich zur Rufnummer eine variable Kommunikationsnetzbezeichnung - im vorliegenden Ausführungsbeispiel mit Kommunikationsnetzbezeichnung VARI bezeichnet - gespeichert, so werden einem Teilnehmer alle im Korrelationsspeicher KSP eingerichteten Kommunikationsnetzbezeichnungen KNB zur Auswahl angeboten. Nach einer Auswahl einer Kommunikationsnetzbezeichnung KNB durch den Teilnehmer erfolgt der Verbindungsaufbau wie beschrieben.

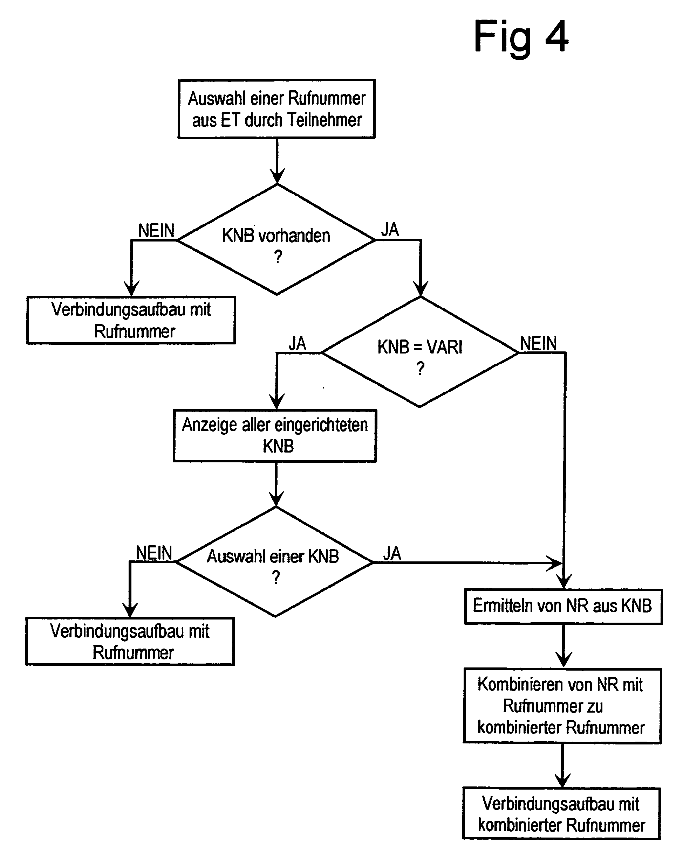

Fig. 4 zeigt ein Ablaufdiagramm zur Veranschaulichung der bei einem Verbindungsaufbau mittels einer, in der elektronischen Telefonbucheinrichtung ET gespeicherten Rufnummer ablaufenden wesentlichen Verfahrensschritte. Wird beispielsweise durch den, dem ersten Kommunikationsendgerät KE-A zugeordneten Teilnehmer für einen Verbindungsaufbau eine Rufnummer - beispielsweise die dem Teilnehmer "Schmidt" zugeordnete Rufnummer 08963620436 - aus dem Rufnummernspeicher RSP der elektronischen Telefonbucheinrichtung ET ausgewählt, wird in einem ersten Schritt überprüft, ob im Rufnummernfeld RF eine Kommunikationsnetzbezeichnung KNB der ausgewählten Rufnummer zugeordnet gespeichert ist. Ist keine Kommunikationsnetzbezeichnung KNB gespeichert, so erfolgt ein Verbindungsaufbau über ein standardmäßig verwendetes Kommunikationsnetz, d.h. im vorliegenden Ausführungsbeispiel über das erste Kommunikationsnetz KN1.

Ist eine Kommunikationsnetzbezeichnung KNB der ausgewählten Rufnummer zugeordnet im Rufnummernfeld RF gespeichert, wird überprüft, ob die Kommunikationsnetzbezeichnung KNB die variable Kommunikationsnetzbezeichnung VARI ist. Ist dies der Fall, werden an der Bedienoberfläche DB des ersten Kommunikationsendgerätes KE-A alle im Korrelationsspeicher KSP eingerichteten Kommunikationsnetzbezeichnungen KNB angezeigt. Die eingerichteten Kommunikationsnetzbezeichnungen KNB können dabei in Abhängigkeit der optischen Bedienoberfläche BD einzeln nacheinander - z.B. bei einem einzeiligen Display - oder in Gruppen - z.B. bei einem mehrzeiligen Display - angezeigt werden und mittels einer am ersten Kommunikationsendgerät KE-A angeordneten - nicht dargestellten - Auswahltaste ausgewählt werden. Alternativ kann eine Auswahl einer Kommunikationsnetzbezeichnung KNB bzw. der ihr zugeordneten Netzrufnummer NR durch Betätigen einer - nicht dargestellten - Kurzwahltaste am ersten Kommunikationsendgerät KE-A erfolgen.

Erfolgt innerhalb einer vorgebbaren Zeitspanne keine Auswahl einer Kommunikationsnetzbezeichnung KNB am ersten Kommunikationsendgerät KE-A, oder wird beispielsweise am ersten Kommunikationsendgerät KE-A eine - nicht dargestellte - sogenannte Fortsetzen-Taste betätigt, so erfolgt ein Verbindungsaufbau über das standardmäßig verwendetes Kommunikationsnetz, d.h. im vorliegenden Ausführungsbeispiel über das erste Kommunikationsnetz KN1. Es erfolgt also ein Verbindungsaufbau ohne eine, der ausgewählten Rufnummer im Sinne einer Vorwahl vorangestellte Netzrufnummer.

Wählt der Teilnehmer am ersten Kommunikationsendgerät KE-A innerhalb der vorgebbaren Zeitspanne eine Kommunikationsnetzbezeichnung KNB aus oder ist die im Rufnummernfeld RF gespeicherte Kommunikationsnetzbezeichnung KNB nicht die variable Kommunikationsnetzbezeichnung VARI, wird aus dem Korrelationsspeicher KSP die, der ausgewählten bzw. gespeicherten Kommunikationsnetzbezeichnung KNB zugeordnete Netzrufnummer NR ermittelt. Die ermittelte Netzrufnummer NR wird in einem nächsten Schritt mit der ausgewählten Rufnummer zu einer kombinierten Rufnummer kombiniert. Hierbei wird die ermittelte Netzrufnummer NR der ausgewählten Rufnummer im Sinne einer Vorwahl vorangestellt. Anschließend erfolgt ein Verbindungsaufbau mittels der kombinierten Rufnummer über das Kommunikationsnetz eines, durch die Netzrufnummer NR identifizierten Netzanbieters.

Wählt der Teilnehmer im vorliegenden Ausführungsbeispiel beispielsweise die Kommunikationsnetzbezeichnung KNB = REG1 aus, wird aus dem Korrelationsspeicher die Netzrufnummer NR = 02221 ausgelesen und der Verbindungsaufbau mit dem zweiten Kommunikationsendgerät KE-B erfolgt mittels der kombinierten Rufnummer 02221-08963620436 über das zweite Kommunikationsnetz KN2. Wählt der Teilnehmer dagegen die Kommunikationsnetzbezeichnung KNB = REG2 aus, erfolgt der Verbindungsaufbau mit dem zweiten Kommunikationsendgerät KE-B mittels der kombinierten Rufnummer 02222-08963620436 über das dritte Kommunikationsnetz KN3.

Durch die Verwendung einer variablen Kommunikationsnetzbezeichnung VARI kann ein Teilnehmer situationsabhängig, z.B. abhängig vom Wochentag oder der Tageszeit unterschiedliche Netzanbieter auswählen und ist somit bei einem Rufaufbau mittels einer, in der elektronischen Telefonbucheinrichtung ET gespeicherten Rufnummer nicht - wie im Stand der Technik - an einen Netzanbieter gebunden. Des weiteren kann der Teilnehmer in Fällen, in denen ein Verbindungsaufbau über ein ausgewähltes Kommunikationsnetz - z.B. über das zweite Kommunikationsnetz KN2 - nicht möglich ist, auf einfache Weise einen neuen Verbindungsaufbau ausgehend von der in der elektronischen Telefonbucheinrichtung ET gespeicherten Rufnummer durch Auswahl einer anderen Kommunikationsnetzbezeichnung KNB über ein alternatives Kommunikationsnetz - z.B. über das dritte Kommunikationsnetz KN3 - einleiten.

Möchte der Teilnehmer nach einer Tarifänderung bei den Netzanbietern weiterhin über den günstigsten Netzanbieter telefonieren, so kann er seine elektronische Telefonbucheinrichtung ET auf einfache Weise durch Änderung der Netzrufnummern NR im Korrelationsspeicher KSP anpassen. Besteht beispielsweise infolge einer Tarifänderung die Möglichkeit über einen Netzanbieter billiger nach USA zu telefonieren, als mit dem bisher im Korrelationsspeicher eingetragenen, so muß der Teilnehmer lediglich die Netzrufnummer NR im Netzrufnummernfeld NRF des zugehörigen Eintrags aktualisieren. Eine manuelle Änderung aller relevanten Einträge im Rufnummernspeicher RSP - wie im Stand der Technik - ist somit nicht mehr notwendig.

## Patentansprüche

1. Verfahren für einen Verbindungsaufbau zwischen einer rufenden und einer gerufenen Kommunikationseinrichtung (KE-A, KE-B) mittels einer in einer, der rufenden Kommunikationseinrichtung (KE-A) zugeordneten elektronischen Telefonbucheinrichtung (ET) gespeicherten Teilnehmerrufnummer,
**dadurch gekennzeichnet,**
**daß** eine Kommunikationsnetzbezeichnung (KNB) der Teilnehmerrufnummer zugeordnet in der elektronischen Telefonbucheinrichtung (ET) gespeichert ist, wobei die Kommunikationsnetzbezeichnung (KNB) eine Netzrufnummer (NR) identifiziert, und daß der Verbindungsaufbau über ein, durch die Netzrufnummer (NR) bezeichnetes Kommunikationsnetz (KN2, KN3) erfolgt.

2. Verfahren nach Anspruch 1 ,
**dadurch gekennzeichnet,**
**daß** durch die Kommunikationsnetzbezeichnung (KNB) mindestens zwei unterschiedliche, auswählbare Netzrufnummern (NR) identifiziert werden, und
**daß** nach einer Auswahl einer Netzrufnummer (NR) der Verbindungsaufbau über ein, durch die ausgewählte Netzrufnummer (NR) bezeichnetes Kommunikationsnetz (KN2, KN3) erfolgt.

3. Verfahren nach Anspruch 2,
**dadurch gekennzeichnet,**
**daß** in Fällen, in denen innerhalb einer vorgebbaren Zeitspanne keine Netzrufnummer (NR) ausgewählt wird, der Verbindungsaufbau über ein standardmäßig eingerichtetes Kommunikationsnetz (KN1) erfolgt.

4. Verfahren nach Anspruch 2,
**dadurch gekennzeichnet,**
**daß** die auswählbaren Netzrufnummern (NR) an einer optischen Anzeigevorrichtung (BD) der rufenden Kommunikationseinrichtung (KE-A) in Form einer Auswahlmenues angezeigt werden, und daß eine Auswahl einer Netzrufnummer (NR) durch Betätigen einer Auswahltaste an der rufenden Kommunikationseinrichtung (KE-A) erfolgt.

5. Verfahren nach Anspruch 2,
**dadurch gekennzeichnet,**
**daß** eine Auswahl einer Netzrufnummer (NR) durch Betätigen einer Kurzwahltaste an der rufenden Kommunikationseinrichtung (KE-A) erfolgt.

6. Verfahren nach einem der vorhergehenden Ansprüche,
**dadurch gekennzeichnet,**
**daß** der Verbindungsaufbau durch eine Wahl der Netzrufnummer (NR) und nachfolgend der Teilnehmerrufnummer erfolgt.

7. Elektronische Telefonbucheinrichtung (ET)
mit einem Rufnummernspeicher (RSP) zum Speichern von Teilnehmerrufnummer, wobei infolge einer Auswahl einer gespeicherten Teilnehmerrufnummer ein Verbindungsaufbau mit einer, durch die ausgewählte Teilnehmerrufnummer bezeichneten Kommunikationseinrichtung (KE-B) eingeleitet wird,
**dadurch gekennzeichnet,**
**daß** die elektronische Telefonbucheinrichtung (ET) einen Korrelationsspeicher (KSP) zum Speichern von Kommunikationsnetzbezeichnungen (KNB) und den Kommunikationsnetzbezeichnungen (KNB) zugeordneten, ein Kommunikationsnetz (KN2, KN3) identifizierenden Netzrufnummern (NR) aufweist, und
**daß** im Rufnummernspeicher (RSP) eine Kommunikationsnetzbezeichnung (KNB) den Teilnehmerrufnummern jeweils zugeordnet speicherbar ist.

## Claims

1. Method for setting up a call between a calling and a called communication device (KE-A, KE-B) by means of a subscriber number stored in an electronic phonebook (ET) assigned to the calling communication device (KE-A),
**characterised in that**
a communication network designation (KNB) assigned to the subscriber number is stored in the electronic phonebook (ET), wherein the communication network designation (KNB) identifies a network call number (NR), and **in that** the call is set up via a communication network designated by the network call number (NR).

2. Method according to claim 1,
**characterised in that**
at least two different, selectable network call numbers (NR) are identified by the communication network designation (KNB), and
**in that** after a network call number (NR) has been selected, the call is set up via a communication network (KN2, KN3) designated by the selected network call number (NR).

3. Method according to claim 2,
**characterised in that**
in cases in which no network call number (NR) is selected within a predeterminable time span, the call is set up via a communication network (KN1) configured by default.

4. Method according to claim 2,
**characterised in that**
the selectable network call numbers (NR) are displayed on an optical display device (BD) of the calling communication device (KE-A) in the form of a selection menu, and **in that** a network call number (NR) is selected by actuating a selection key on the calling communication device (KE-A).

5. Method according to claim 2,
**characterised in that**
a network call number (NR) is selected by actuating an abbreviated-dialling key on the calling communication device (KE-A).

6. Method according to any one of the preceding claims,
**characterised in that**
the call is set up by dialling the network call number (NR) and subsequently the subscriber number.

7. Electronic phonebook (ET)
comprising a call number memory (RSP) for storing subscriber numbers, wherein, as a consequence of selecting a stored subscriber number, the setting up of a call with a communication device (KE-B) designated by the selected subscriber number is initiated,
**characterised in that**
the electronic phonebook (ET) has a correlational memory (KSP) for storing communication network designations (KNB) and network call numbers (NR), assigned to the communication network designations (KNB), identifying a communication network (KN1, KN2), and
**in that** a communication network designation (KNB) can be stored in the call number memory (RSP), said communication network designation (KNB) being assigned in each case to the subscriber call numbers.

## Revendications

1. Procédé pour un établissement de liaison entre un dispositif de communication appelant et un dispositif de communication appelé (KE-A, KE-B) au moyen d'un numéro d'appel d'abonné stocké dans un annuaire téléphonique électronique (ET) et attribué au dispositif de communication appelant (KE-A),
**caractérisé en ce que**
une désignation du réseau de communication (KNB), attribuée au numéro d'appel d'abonné, est stockée dans l'annuaire téléphonique électronique (ET), la désignation du réseau de communication (KNB) identifiant un numéro d'appel de réseau (NR) et **en ce que** l'établissement de liaison s'effectue par un réseau de communication (KN2, KN3) désigné par le numéro d'appel de réseau (NR).

2. Procédé selon la revendication 1,
**caractérisé en ce que**
au moins deux numéros d'appel de réseau (NR) différents et pouvant être choisis sont identifiés par le dispositif de réseau de communication (KNB) et
**en ce que**, après une sélection d'un numéro d'appel de réseau (NR), l'établissement de la liaison s'effectue au moyen d'un réseau de communication (KN2, KN3) désigné par le numéro d'appel de réseau (NR) choisi.

3. Procédé selon la revendication 2,
**caractérisé en ce que**
dans les cas où aucun numéro d'appel de réseau (NR) n'est sélectionné dans le délai d'un laps de temps prédéfinissable, l'établissement de liaison s'effectue au moyen d'un réseau de communication (KN1) mis en place de façon standard.

4. Procédé selon la revendication 2,
**caractérisé en ce que**
les numéros d'appel de réseau (NR) pouvant être sélectionnés sont affichés sur un dispositif d'affichage optique (BD) du dispositif de communication appelant (KE-A) sous la forme d'un menu de sélection, et **en ce qu'**une sélection d'un numéro de réseau (NR) s'effectue par l'actionnement d'une touche de sélection sur le dispositif de communication appelant (KE-A).

5. Procédé selon la revendication 2,
**caractérisé en ce qu'**un choix d'un numéro d'appel de réseau (NR) s'effectue par l'actionnement d'une touche de sélection raccourcie sur le dispositif de communication appelant (KE-A).

6. Procédé selon l'une quelconque des revendications précédentes,
**caractérisé en ce que**
l'établissement de la liaison s'effectue par un choix du numéro d'appel de réseau (NR) et ensuite du numéro d'appel d'abonné.

7. Annuaire téléphonique électronique (ET) avec une mémoire de numéro d'appel (RSP) pour le stockage de numéros d'appel d'abonnés, l'établissement d'une liaison étant amorcé à la suite d'un choix d'un numéro d'appel d'abonné mémorisé avec un dispositif de communication (KE-B) désigné par le numéro d'appel d'abonné choisi,
**caractérisé en ce que**
l'annuaire téléphonique électronique (ET) présente une mémoire de corrélation (KSP) pour le stockage de désignations de réseau de communication (KNB) et de numéros d'appel du réseau (NR) attribués aux désignations de réseau de communication (KNB) et identifiant un réseau de communication (KN2, KN3), et
**en ce qu'**une désignation de réseau de communication (KNB) attribuée respectivement aux numéros d'appel d'abonnés, peut être stockée dans la mémoire de numéros d'appel (RSP).
